Europäisches Patentamt

European Patent Office

Office européen des brevets

(19)

(11) Veröffentlichungsnummer: **0 015 419**
**B1**

(12)
# EUROPÄISCHE PATENTSCHRIFT

(45) Veröffentlichungstag der Patentschrift:
31.10.84

(51) Int. Cl.³: **B 60 C 23/10, B 62 H 5/14**

(21) Anmeldenummer: 80100751.9

(22) Anmeldetag: 14.02.80

(54) **Pumpe, insbesondere Luftpumpe für Zweiräder.**

(30) Priorität: 21.02.79 DE 2906662

(43) Veröffentlichungstag der Anmeldung:
17.09.80 Patentblatt 80/19

(45) Bekanntmachung des Hinweises auf die Patenterteilung:
31.10.84 Patentblatt 84/44

(84) Benannte Vertragsstaaten:
**BE FR GB IT NL**

(56) Entgegenhaltungen:
**DE - C - 351 258**
**DE - C - 376 515**
**DK - A - 81 996**
**FR - A - 942 704**

(73) Patentinhaber: **Thanscheidt, Günter, Zur Sonnenblume 6c, D-5620 Velbert 1 (DE)**

(72) Erfinder: **Thanscheidt, Günter, Zur Sonnenblume 6c, D-5620 Velbert 1 (DE)**

## Beschreibung

Die Erfindung betrifft eine Pumpe, insbesondere eine Luftpumpe für Zweiräder, mit einem mindestens einen Kolben und einen Zylinder aufnehmenden Gehäuse sowie mit einem abklappbaren Bügel zum Abschließen und Betätigen der Pumpe.

Eine derartige, aus der DK-A-81 996 bekannte Pumpe ermöglicht zwar ein Abschließen und verhindert somit ein Verlieren der Pumpe oder einen Diebstahl derselben, nicht jedoch eine unbefugte Entfernung des gesamten Zweirades. Dazu kommt, daß diese bekannte Pumpe im abgeschlossenen Zustand verhältnismäßig unhandlich ausgebildet ist und aufgrund der herkömmlichen Bauweise schwer bedienbar ist.

Der Erfindung liegt dementsprechend die Aufgabe zugrunde, eine Pumpe der genannten Art so auszubilden, daß diese nicht nur das gesamte Fahrzeug sichert und auch unverlierbar mit diesem verbunden ist, sondern daß die Pumpe bei Außerdienststellung nicht sperrig sowie verschließbar und bei Betrieb ohen größeren Kraftaufwand durch eine Drehbewegung betätigbar ist.

Diese Aufgabe wird erfindungsgemäß dadurch gelöst, daß der Bügel im zugeklappten Zustand am Gehäuse festlegbar ist und im ausgeklappten Zustand eine mit einer Antriebswelle der Pumpe verbundene Handkurbel bildet, welche die Drehbewegung der Antriebwelle in eine Hubbewegung des getrieblich damit verbundenen Kolbens umsetzt. Auf diese Weise kann die Pumpe zwischen dem Rahmen und Felge beispielsweise eines Fahrrades angebracht und abgeschlossen werden, wodurch eine Bewegung des Fahrrades verhindert ist. Wird die Luftpumpe lediglich mit ihrem Bügel um ein Rahmenteil des Fahrrades gelegt und abgeschlossen, ist das Fahrrad fahrbereit, die Luftpumpe jedoch nicht entfernbar. Nach Lösen des Schlosses ist es nur erforderlich, den Bügel abzuklappen, der sodann als einfach zu handhabende Kurbel des nunmehr als Luftpumpe verwendbaren Antriebsaggregates eingesetzt wird.

Weitere vorteilhafte Merkmale nach der Erfindung sind den Unteransprüchen entnehmbar.

Die Erfindung ist in der Zeichnung schematisch in einem Ausführungsbeispiel dargestellt und wird nachstehend näher beschrieben. Es zeigt

Fig. 1 einen Schnitt durch die erfindungsgemäße Pumpe,

Fig. 2 eine Oberansicht.

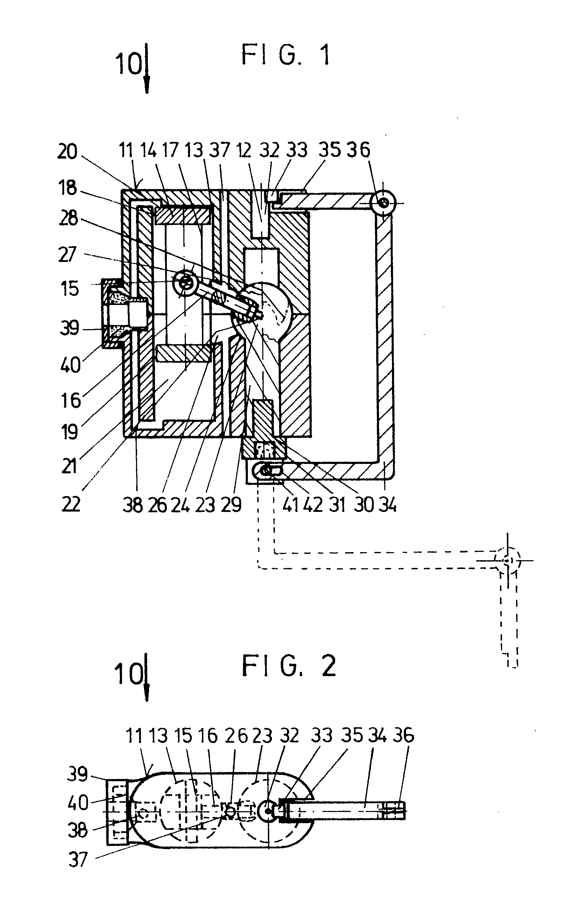

Die in der Fig. 1 zugrundegelegte Pumpe 10 umfaßt im wesentlichen ein ovales Gehäuse 11 mit einer zentralen, hier gestrichelt gezeichneten Gehäuseachse 12. Im Gehäuse 11 ist ein Zylinder 13 angeordnet, in dem der die Hubbewegungen ausführende Kolben 14 gleiten kann. Der Kolben 14 ist mittels eines Pleuelzapfens 15 mit einer Pleuelstange 16 verbunden und weist eine zur Achse des Pleuelzapfens 15 rotationssymmetrische Form mit einem Bereich des Pleuelzapfens 15 verjüngten Schaft 17 mit einer ersten Lauffläche 18 sowie einer zweiten Lauffläche 19 auf. Auf diese Weise werden zwischen den jeweiligen Kolbenoberflächen und dem Zylindergehäuse je ein Arbeitsraum 20 bzw. 21 gebildet.

Die Längsachse der Pleuelstange 16 ist bei jeder Hubstellung des Kolbens 14 auf den Mittelpunkt 22 eines im Gehäuse 11 drehbar gelagerten, im wesentlichen kugelförmigen Umkehrungselementes 23 gerichtet, das sich in kalottenförmigen Lagern 24 abstützt. Im Zylinder 13 ist ein Pleueltunnel 26 zum Druchtritt und zur axialen Führung der Pleuelstange 16 vorgesehen.

Zur Umsetzung der Hubbewegung der Kolben 14 in eine Rotationsbewegung ist die Pleuelstange 16 über eine das Umkehrungselement 23 in zwei Hälften teilende Laufrolle 27 in das Umkehrungselement 23 geführt, wobei die Laufrolle 27 in einer gestrichelt gezeichneten Kurvenbahn 28 abrollt. Das Umkehrungselement 23 ist mit einer Antriebswelle 29 fest verbunden.

Die Antriebswelle 29 weist an ihrem unteren Ende einen Kurbelansatz 30, in dem eine rechteckförmige Vertiefung 31 vorgesehen ist. Im dieser Vertiefung 31 gegenüberliegenden Teil des Gehäuses 11 ist ein herkömmliches Schloß 32 eingelassen, das mit einer Schloßverriegelung 33 das eine Ende eines Bügels 34 verschließend übergreift und diesen mittels einer Arretierung 35 am Gehäuse 11 festlegt. Der Bügel 34 weist ein Gelenk 36 auf und kann nach Lösen der Schloßverriegelung 33 in die gestrichelt eingezeichnete Lage geschwenkt werden, in der er als Kurbel zum Antrieb der Antriebswelle 29 dient. Das Antriebsaggregat 10 arbeitet dann als Luftpumpe, indem Luft durch einen Ansaugkanal 37 in den Zylinder 13 strömt, durch den Kolben 14 jeweils im Arbeitsraum 20 bzw. 21 komprimiert wird und über einen Ausstoßkanal 38 sowie eine Schraubenkappe 39 mit einer herkömmlichen Lippendichtung 40 die Pumpe 10 verläßt.

Im gestrichelt gezeichneten, ausgeschwenkten Zustand wird der Bügel 34 um einen Drehpunkt 41 bewegt, wobei dieser aus einer Stift-Langloch-Führung 42 gebildet ist, so daß das Ende des Bügels in die Vertiefung 31 des Kurbelansatzes 30 eingreift.

## Patentansprüche

1. Pumpe, insbesondere Luftpumpe für Zweiräder, mit einem mindestens einen Kolben (14) und einen Zylinder (13) aufnehmenden Gehäuse (11) sowie mit einem abklappbaren Bügel (34) zum Abschließen und Betätigen der Pumpe, dadurch gekennzeichnet, daß der Bügel (34) im zugeklappten Zustand am Gehäuse (11) festlegbar ist und im ausklappten Zustand eine mit einer Antriebswelle (29) der Pumpe (10) verbundene Handkurbel bildet, welche die Drehbewegung der Antriebswelle (29) in eine Hubbewegung des getrieblich damit verbundenen Kolbens (14) umsetzt.

2. Pumpe nach Anspruch 1, dadurch gekennzeichnet, daß der Kolben (14) parallel zur Antriebswelle (29) bewegbar ist und die getriebliche Verbindung zwischen beiden mittels einer Pleuelstange (16) erfolgt, die in einem Pleueltunnel (26) durch den Zylinder (13) tritt und im Pleueltunnel (26) axial geführt ist, wobei die Pleuelstange (16) einerseits im mittleren Bereich des Kolbens (14) angelenkt und andererseits mittels einer in einer Kurvenbahn (28) abrollenden Laufrolle (27) in einem im Gehäuse (11) drehbar gelagerten, kugelförmigen Umkehrungselement (23) geführt ist, welches mit der Antriebswelle (29) fest verbunden ist, und wobei die Kurvenbahn (28) derart gestaltet ist, daß die Längsachse der Pleuelstange (16) beim Drehen der Antriebswelle (29) jeweils auf den Mittelpunkt (22) des Umkehrungselementes (23) gerichtet ist.

3. Pumpe nach Anspruch 1 oder 2, dadurch gekennzeichnet, daß der Kolben (14) einen verjüngten Schaft (17) mit an den beiden Endteilen des Schaftes (17) angebrachten Laufflächen (18, 19) aufweist und zwischen den jeweiligen Kolbenoberflächen und dem Zylindergehäuse je ein Arbeitsraum (20, 21) gebildet wird.

## Claims

1. A pump, especially an air pump for bicycles, comprising at least one pistan and one cylinder within a housing; a stirrup hingedly attached to the housing for locking up and actuating the pump, the stirrup being fixed to the housing in its closed position and forming a handle in its hinged-out position; and a driving shaft connected to the handle for transmitting the rotation of the driving shaft into a piston travel, the piston being drivingly connected with the shaft.

2. A pump according to claim 1, wherein the piston is movable in parallel with the shaft, both being drivingly connected by means of a piston rod, the piston rod penetrates the cylinder within a piston rod channel axially guiding the piston rod, one end of the piston rod is pivotally mounted on the piston in the middle region thereof and the other end is guided in a ball-shaped reversing element by means of a roller revoling on a curved track, the reversing element being pivoted in the housing and fixedly connected to the shaft, and the curved track is designed in such a way that the longitudinal axis of the piston rod always is directed to the center of the reversing element when rotating the shaft.

3. A pump according to claim 1, wherein the piston includes a conical shaft having roller surfaces on each end, further comprising a working space being formed within the surfaces of the piston and the housing of the cylinder.

## Revendications

1. Pompe, en particulier pompe à air pour véhicule à deux roues avec un carter (11) recevant au moins un piston (14) et un cylindre (13) ainsi qu'avec un étrier rabattable (34) pour l'isolement et la mise en action de la pompe caractérisée en ce que l'etrier (34) à l'état rabattu, peut venir se placer sur le carter (11) et à l'état écarté il frome une manivelle reliée à un arbre d'entraînement (29) de la pompe (10), qui transforme le mouvement de rotation de l'arbre d'entraînement (29) en un mouvement de poussée du piston qui lui est relié de manière motrice.

2. Pompe selon la revendication 1, caractérisée en ce que le piston (14) est mobile parallèlement à l'arbre d'entraînement (29) et la jonction motrice entre eux se produit au moyen d'une bielle (16) qui traverse le cylindre (13) par un tunnel (26) et est guidée axialement dans le tunnel (26), ainsi la bielle (16) est articulée d'une part à la partie médiane du piston (14) et d'autre part est guidée au moyen d'un galet (27) roulant sur une voie courbée (28) dans un élément de renversement (23) en forme de bille placé rotatif dans le carter (11), qui est solidement relié à l'arbre d'entraînement (29) et en ce que la voie courbée (28) est configurée de façon que l'axe longitudinal de la bielle (16) lors de la rotation de l'arbre d'entraînement (29) soit toujours dirigé vers le point médian (22) de l'élément de renversement (23).

3. Pompe selon la revendication 1 ou 2, caractérisée en ce que le piston (14) présente une tige rétrécie (17) avec des surfaces de roulement (18, 19) aux deux parties extrêmes de la tige (17) et en ce qu'un espace de travail (20, 21) est formé entre chaque surface supérieure du piston et le carter.

FI G. 1

10

20 18 28 27 15 39 40 16 19 21 22

11 14 17 13 37 12 32 33 35 36

38 26 24 23 29    41 42 31 30 34

FI G. 2

10

11 13 15 16 26 23 32 33 35 34 36

39 40 38 37